# FASCICULE DE BREVET EUROPEEN

(11) **EP 2 429 848 B1**
(45) Date de publication et mention de la délivrance du brevet: **26.08.2015**
(21) Numéro de dépôt: 10727765.9
(22) Date de dépôt: 07.05.2010
(51) Int. Cl.: B60K 13/04, F01N 13/18

(54) **SUPPORT DE FIXATION D'UN TUBE SUPPORT D'ECHAPPEMENT**
BEFESTIGUNGSTRÄGER FÜR EIN AUSPUFFHALTERROHR
FIXING SUPPORT FOR AN EXHAUST SUPPORT PIPE

(30) Priorité: 15.05.2009 FR 0953229
(43) Date de publication de la demande: 21.03.2012
(73) Titulaire: Renault s.a.s., 92100 Boulogne-Billancourt (FR)
(72) Inventeur: KOWALSKI, Philippe, F-78180 Montigny le Bretonneux (FR); KULMANECK, Bruno, F-78690 Les Essarts Le Roi (FR)
(86) Numéro de dépôt international: PCT/FR2010/050883
(87) Numéro de publication internationale: WO 2010/130926

(56) Documents cités:
- DE-U1-202005 007 226
- FR-A1- 2 870 790
- JP-A- 2001 193 450
- JP-U- 58 070 578
- US-A- 5 711 551
- US-A1- 2006 042 856

## Description

L'invention concerne un support de fixation d'un tube support d'échappement. Plus particulièrement, l'invention concerne un ensemble de support d'échappement et son procédé de solidarisation sur un longeron de véhicule.

Actuellement, les tubes support d'échappement sont fixés sur un coté de longeron. FR 2 870 790 divulgue un tel support de fixation.

Pour limiter les contraintes vibratoires transmises de la ligne d'échappement au longeron, et donc au véhicule, la ligne d'échappement est reliée aux tubes support par l'intermédiaire d'un dispositif amortisseur en matériau souple, autrement appelé silent bloc. Ce dispositif permet d'absorber une partie des vibrations. Une partie résultante de ces vibrations est toutefois transmise au longeron du véhicule et reste perceptible par l'utilisateur du véhicule.

L'invention a pour objectif de réduire les vibrations transmises au véhicule qui ne sont pas absorbées par le dispositif amortisseur.

Selon un premier aspect de l'invention, il s'agit d'un support de fixation d'un tube support d'échappement, ledit support est formé d'une plaque repliée de manière à présenter deux faces d'appui s'étendant dans des plans sensiblement parallèles, conformées de manière à pouvoir prendre appui sur les parois internes opposées d'un longeron à section transversale en forme de U, et comporte une partie de fixation destinée à être fixée au tube support d'échappement.

La multiplication des surfaces d'appui du support de fixation permet de diviser d'autant les vibrations transmises par le tube support d'échappement.

Selon l'invention, la plaque présente un profil sensiblement en forme de Z, les faces d'appui étant formées par les faces parallèles du Z, la partie médiane du Z comportant la partie de fixation.

Le profil en forme de Z du support permet d'une part d'assurer une rigidité transversale optimale en formant un couple dans la section du longeron et d'autre part d'obtenir une répartition équilibrée des efforts sur les deux parois du longeron.

En particulier, la partie de fixation présente un renfoncement longitudinal d'axe parallèle aux faces d'appui du Z, ledit renfoncement longitudinal étant apte à recevoir une partie du tube support d'échappement.

Le renfoncement longitudinal aménagé dans la partie médiane assure une rigidité verticale au support, associé à l'encastrement du tube support d'échappement soudé sur le support.

Selon l'invention, la partie de fixation présente un pied apte à venir en appui sur le fond du longeron à section en forme de U, à l'intérieur de ce dernier.

Le pied permet d'obtenir un appui naturel du support sur le fond du longeron.

Il permet également d'ajouter une surface d'appui entre le longeron et le tube support d'échappement, réduisant d'autant les vibrations.

En particulier, selon l'invention, le pied présente un profil en forme d'un V dont le plan médian des branches s'étend sensiblement perpendiculairement à la partie de fixation, et le bord libre supérieur d'une première branche du V est solidaire de la partie de fixation du Z, l'autre branche du V étant apte à venir en appui sur le fond du longeron.

Avantageusement, la conformation en forme de V permet d'assurer un appui sur le fond sans forcément positionner la pièce à une hauteur précise dans le longeron.

Selon un autre avantage, la conformation en forme de V permet d'obtenir une bonne flexibilité du support avant sa solidarisation sur le longeron, facilitant son positionnement à l'intérieur de ce dernier.

Toujours avantageusement, le pied comprend un orifice, apte à laisser passer une partie du tube support d'échappement lorsque ce dernier est fixé à la partie de fixation.

Il est alors relativement aisé d'assurer l'étanchéité avec l'extérieur du véhicule pour empêcher les infiltrations d'eau à l'intérieur du longeron. Cette étanchéité est par exemple réalisée en appliquant un cordon de mastic autour du tube au niveau de l'orifice du pied.

En particulier, chaque face d'appui comprend au moins une rainure débouchant sur un bord libre.

Avantageusement, la rainure s'étend sur toute la longueur ou la largeur de la face d'appui.

De préférence, la rainure est sensiblement perpendiculaire au renfoncement longitudinal de la partie de fixation.

Ces rainures ont pour objectif d'assurer une meilleure tenue de la pièce lorsque cette dernière n'est pas encore montée sur le longeron.

De plus, ces rainures favorisent la pénétration d'un traitement de surface anti corrosion entre le support de fixation et le longeron.

L'invention concerne également un ensemble support d'échappement comprenant un support de fixation tel que décrit précédemment et un tube support d'échappement, ledit tube support d'échappement étant en forme de L et présentant une extrémité libre apte à être solidarisée à l'échappement, son autre extrémité étant solidarisée sur la partie de fixation du support de fixation.

La solidarisation du tube sur la partie de fixation est assurée par tout moyen connu de l'homme du métier et de préférence par soudure ou par collage.

L'invention concerne en outre le procédé de solidarisation de l'ensemble support d'échappement dans un longeron à section transversale en forme de U, le procédé comprenant les étapes suivantes :
- Insérer l'extrémité libre du tube support d'échappement dans un orifice correspondant du fond du longeron;
- Réaliser un quart de tour à l'ensemble support d'échappement afin de positionner le support de fixation et le tube à l'intérieur du longeron, les faces d'appui venant se positionner en contact des parois internes, le pied venant se positionner sur le fond du longeron;
- Fixer le support de fixation sur le longeron en solidarisant les faces d'appui sur les parois internes du longeron.

Avantageusement, la solidarisation des faces d'appuis sur les parois internes du longeron s'effectue par soudage ou par collage. En particulier, la soudure est du type par résistance électrique.

L'invention est maintenant décrite en faisant référence aux dessins, non limitatifs, dans lesquels :
La figure 1 est une vue d'ensemble d'un ensemble support d'échappement selon l'invention;
La figure 2 est une vue d'ensemble du support d'échappement de la figure 1 dans un longeron dont une face est partiellement représentée.

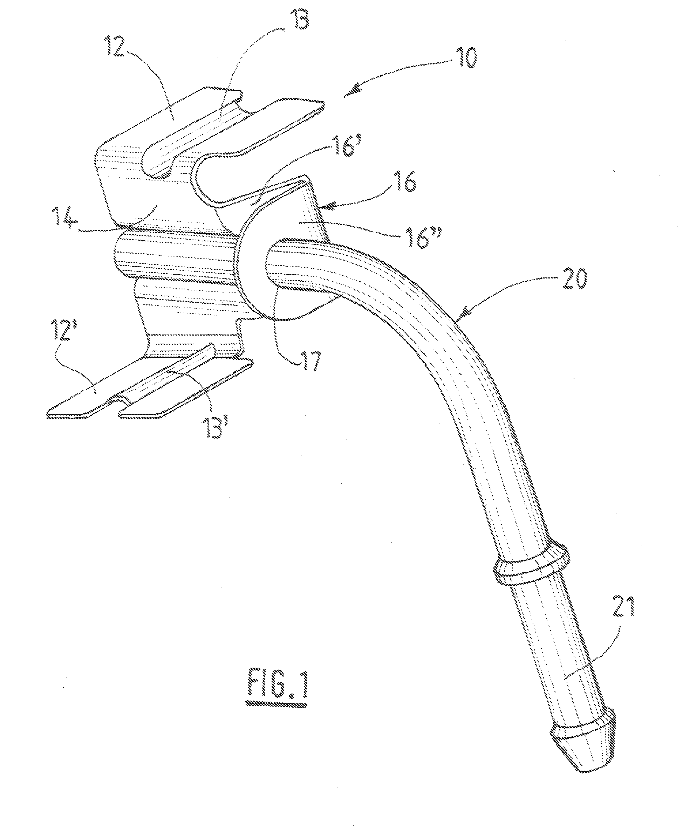

Selon le mode de réalisation représenté sur la figure 1, il s'agit d'un support de fixation 10 d'un tube 20 support d'échappement (non représenté). La partie libre du tube 20 comprenant un renfoncement 21 apte à recevoir un dispositif amortisseur en caoutchouc destiné d'une part à solidariser l'échappement sur le tube, et donc sur le véhicule, et d'autre part à absorber une partie des vibrations.

Le support de fixation 10 se présente sous la forme d'une plaque repliée, par exemple par emboutissage, de manière à présenter deux faces d'appuis 12, 12' s'étendant dans des plans sensiblement parallèles.

Dans l'exemple, la plaque présente un profil sensiblement en forme de Z dont les faces d'appuis 12, 12' sont formées par les faces parallèles du Z.

La partie 14 reliant les faces d'appuis 12, 12' présente un renfoncement longitudinal 15 apte à recevoir au moins une partie du tube 20 support d'échappement. Cette partie de fixation 14 est formée sur la partie médiane du support 10 dans l'exemple. Le renfoncement 15 est de préférence situé au centre de cette partie de fixation, à égale distance des deux face d'appuis 12, 12'.

La solidarisation du tube 20 sur le renfoncement est assurée par soudage mais on pourrait également envisager tout autre mode de réalisation tel que par exemple par collage.

Dans l'exemple représenté, les faces 12, 12' présentent chacune une rainure 13, 13' s'étendant d'une extrémité à l'autre de la plaque 12, 12', la rainure 13, 13' étant sensiblement perpendiculaire au renfoncement 15.

Ces rainures 13, 13' permettent une meilleure tenue du support de fixation 10 après son emboutissage et ce jusqu'à son assemblage sur le longeron 30.

Un autre avantage de ces rainures 13, 13' est de favoriser la pénétration des traitements anticorrosion au coeur des éléments à protéger.

On pourrait envisager d'autres modes de réalisation, comme par exemple plusieurs rainures et/ou encore des rainures sensiblement parallèles au renfoncement 15.

Toujours dans l'exemple représenté, le support comprend un pied 16 en forme de V solidaire de la partie de fixation 14. Ce pied 16 ajoute une surface d'appui au niveau du longeron 30, diminuant ainsi les contraintes vibratoires, et permet également de faciliter l'installation du support 10 dans le longeron 30.

Le pied 16 représenté dans l'exemple présente un orifice 17 apte à laisser passer une partie du tube 20 lorsque ce dernier est fixé sur la partie de fixation 14. On pourrait également envisager une rainure dans la branche 16", débouchant à l'opposée de la pointe du V, la rainure étant alors apte à laisser passer une partie du tube 20.

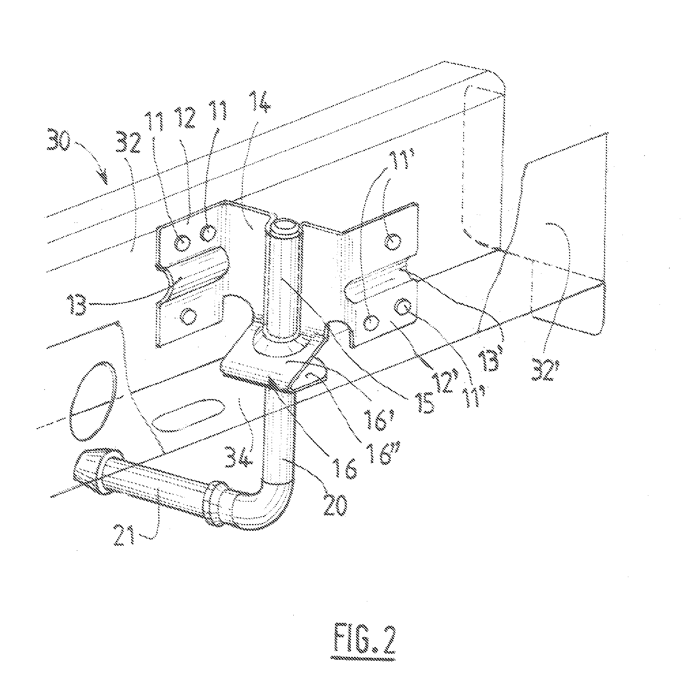

Le tube 20 et le support de fixation 10 peuvent être fabriqués séparément et assemblés ultérieurement. Lorsque l'assemblage du tube 20 et du support de fixation 10 est réalisé, on obtient alors un ensemble support d'échappement à mettre en place et à solidariser au niveau d'un longeron, tel que représenté sur la figure 2.

La solidarisation de l'ensemble support d'échappement sur le longeron 30 est par exemple réalisée par soudure par résistance électrique entre les faces d'appuis 12, 12' et les parois internes 32, 32' du longeron 30 en forme de U. Dans notre exemple, la solidarisation est assurée en trois points 11 et 11' par face d'appui mais on pourrait également envisager une solidarisation en deux points ou quatre points.

Le support 10 est alors de préférence fixé à une extrémité du tube 20, l'autre extrémité 21 de ce dernier étant destinée à recevoir l'échappement. Le tube 20 se présente généralement sous la forme d'un L.

Afin de mettre en place l'ensemble support d'échappement dans le longeron 30 en forme de U, il convient d'insérer l'extrémité libre du tube 20 dans un orifice correspondant du fond 34 du longeron 30 et de réaliser un quart de tour à l'ensemble support d'échappement afin de le positionner correctement dans le longeron 30. Cette opération réalisée, les surfaces d'appuis 12 et 12' se retrouvent respectivement en contact avec les parois internes 32 et 32' du longeron 30, la branche 16" du pied 16 se trouvant en appui sur le fond 34.

Il reste à solidariser l'ensemble en réalisant une soudure entre les faces d'appui 12, 12' et les parois internes 32, 32'.

Il est possible d'assurer l'étanchéité entre l'extérieur du véhicule et le longeron en appliquant par exemple un cordon de mastic autour du tube, au niveau de la branche 16".

L'ensemble support d'échappement ainsi assemblé permet de réduire les vibrations transmises au véhicule en multipliant les surfaces d'appuis, trois dans notre exemple, permettant de diviser d'autant la propagation des vibrations à l'ensemble du véhicule.

## Revendications

1. Support de fixation (10) d'un tube (20) support d'échappement, ledit support (10) est formé d'une plaque repliée de manière à présenter deux faces d'appui (12, 12') s'étendant dans des plans sensiblement parallèles et une partie de fixation (14) destinée à être fixée au tube (20) support d'échappement, **caractérisé en ce que** la plaque présente un profil sensiblement en forme de Z, les faces d'appui (12, 12') étant formées par les faces parallèles du Z, la partie médiane du Z comportant la partie de fixation (14), et **en ce que**
- les deux faces d'appui (12, 12') sont conformées de manière à pouvoir prendre appui respectivement sur les parois internes (32, 32') opposées d'un longeron (30) à section transversale en forme de U, ,
- la partie de fixation (14) présente un pied (16) apte à venir en appui sur le fond du longeron (30) à section en forme de U, à l'intérieur de ce dernier, lorsque les faces d'appui (12, 12') sont en appui respectivement sur les parois internes opposées du longeron,
- le pied (16) présente un profil en forme d'un V dont le plan médian des branches s'étend sensiblement perpendiculairement à la partie de fixation (14), et le bord libre supérieur d'une première branche (16') du V est solidaire de la partie de fixation (14) du Z, l'autre branche (16") du V étant apte à venir en appui sur le fond (34) du longeron (30) lorsque les faces d'appui (12, 12') sont en appui respectivement sur les parois internes opposées du longeron.

2. Support de fixation (10) selon la revendication 1, **caractérisé en ce que** la partie de fixation (14) présente un renfoncement longitudinal (15) d'axe parallèle aux faces d'appui (12, 12') du Z, ledit renfoncement longitudinal (15) étant apte à recevoir une partie du tube (20) support d'échappement.

3. Support de fixation (10) selon l'une des revendications 1 ou 2, **caractérisé en ce que** le pied (16) comprend un orifice (17), apte à laisser passer une partie du tube (20) support d'échappement lorsque ce dernier est fixé à la partie de fixation (14).

4. Support de fixation selon l'une quelconque des revendications 1 à 3, **caractérisé en ce que** chaque face d'appui (12, 12') comprend au moins une rainure (13, 13') débouchant sur un bord libre.

5. Ensemble support d'échappement comprenant un support de fixation (10) selon l'une quelconque des revendications 1 à 4 et un tube (20) support d'échappement, ledit tube (20) support d'échappement étant en forme de L et présentant une extrémité libre apte à être solidarisée à l'échappement, son autre extrémité étant solidarisée sur la partie de fixation (14) du support de fixation (10).

6. Procédé de solidarisation de l'ensemble support d'échappement selon la revendication 5, dans un longeron (30) à section transversale en forme de U, le procédé comprenant les étapes suivantes :
- Insérer l'extrémité libre du tube (20) support d'échappement dans un orifice correspondant du fond du longeron (30) ;
- Réaliser un quart de tour à l'ensemble support d'échappement afin de positionner le support de fixation (10) et le tube (20) à l'intérieur du longeron (30), les faces d'appui (12, 12') venant se positionner en contact des parois internes (32, 32'), le pied (16) venant se positionner sur le fond (34) du longeron (30);
- Fixer le support de fixation (10) sur le longeron (30) en solidarisant les faces d'appui (12, 12') sur les parois internes (32, 32') du longeron (30).

## Patentansprüche

1. Befestigungsträger (10) für ein Auspuffhalterrohr (20), wobei der Träger (10) aus einer Platte gebildet ist, die derart umgebogen ist, dass sie zwei Anlageflächen (12, 12'), die sich in im Wesentlichen parallelen Ebenen erstrecken, und einen Befestigungsabschnitt (14) aufweist, der dazu bestimmt ist, an dem Auspuffhalterrohr (20) befestigt zu werden, **dadurch gekennzeichnet, dass** die Platte ein im Wesentlichen Z-förmiges Profil aufweist, wobei die Anlageflächen (12, 12') durch die parallelen Flächen des Z gebildet sind, wobei der mittlere Abschnitt des Z den Befestigungsabschnitt (14) aufweist, und dadurch, dass
- die zwei Anlageflächen (12, 12') derart gebildet sind, dass sie sich jeweils auf den gegenüberliegenden Innenwänden (32, 32') eines Längsträgers (30) mit U-förmigem Querschnitt abstützen können,
- der Befestigungsabschnitt (14) einen Fuß (16) aufweist, der geeignet ist, sich auf dem Boden des Längsträgers (30) mit U-förmigem Querschnitt im Inneren desselben abzustützen, wenn sich die Anlageflächen (12, 12') jeweils auf den gegenüberliegenden Innenwänden des Längsträgers abstützen,
- der Fuß (16) ein V-förmiges Profil aufweist, dessen Mittelebene der Schenkel sich im Wesentlichen senkrecht zu dem Befestigungsabschnitt (14) erstreckt, und der obere freie Rand eines ersten Schenkels (16') des V mit dem Befestigungsabschnitt (14) des Z fest verbunden ist, wobei der andere Schenkel (16") des V geeignet ist, sich auf dem Boden (34) des Längsträgers (30) abzustützen, wenn sich die Anlageflächen (12, 12') jeweils auf den gegenüberliegenden Innenwänden des Längsträgers abstützen.

2. Befestigungsträger (10) nach Anspruch 1, **dadurch gekennzeichnet, dass** der Befestigungsabschnitt (14) eine längsverlaufende Vertiefung (15) mit einer Achse, die parallel zu den Anlageflächen (12, 12') des Z ist, aufweist, wobei die längsverlaufende Vertiefung (15) geeignet ist, einen Abschnitt des Auspuffhalterrohrs (20) aufzunehmen.

3. Befestigungsträger (10) nach einem der Ansprüche 1 oder 2, **dadurch gekennzeichnet, dass** der Fuß (16) eine Öffnung (17) aufweist, die geeignet ist, einen Abschnitt des Auspuffhalterrohrs (20) durchzulassen, wenn Letzteres an dem Befestigungsabschnitt (14) befestigt ist.

4. Befestigungsträger nach einem der Ansprüche 1 bis 3, **dadurch gekennzeichnet, dass** jede Anlagefläche (12, 12') mindestens eine Rille (13, 13') aufweist, die an einem freien Rand mündet.

5. Auspuffhalteranordnung, umfassend einen Befestigungsträger (10) nach einem der Ansprüche 1 bis 4 und ein Auspuffhalterrohr (20), wobei das Auspuffhalterrohr (20) L-förmig ist und ein freies Ende aufweist, das geeignet ist, mit dem Auspuff fest verbunden zu werden, wobei sein anderes Ende mit dem Befestigungsabschnitt (14) des Befestigungsträgers (10) fest verbunden ist.

6. Verfahren zur festen Verbindung der Auspuffhalteranordnung nach Anspruch 5 an einem Längsträger (30) mit U-förmigem Querschnitt, wobei das Verfahren die folgenden Schritte aufweist:
- Einfügen des freien Endes des Auspuffhalterrohrs (20) in eine entsprechende Öffnung des Bodens des Längsträgers (30);
- Durchführen einer Vierteldrehung an der Auspuffhalteranordnung, um den Befestigungsträger (10) und das Rohr (20) im Inneren des Längsträgers (30) zu positionieren, wobei sich die Anlageflächen (12, 12') in Kontakt mit den Innenwänden (32, 32') positionieren, wobei sich der Fuß (16) auf dem Boden (34) des Längsträgers (30) positioniert;
- Befestigen des Befestigungsträgers (10) auf dem Längsträger (30), indem die Anlageflächen (12, 12') auf den Innenwänden (32, 32') des Längsträgers (30) fest verbunden werden.

## Claims

1. Support (10) for attaching an exhaust-carrying pipe (20), said support (10) is formed from a plate that is bent so as to have two bearing faces (12, 12') extending in substantially parallel planes and an attachment portion (14) designed to be attached to the exhaust-carrying pipe (20), **characterized in that** the plate has a substantially Z-shaped profile, the bearing faces (12, 12') being formed by the parallel faces of the Z, the mid-portion of the Z comprising the attachment portion (14), and **in that**
- the two bearing faces (12, 12') are formed so as to be able to bear respectively on the opposite internal walls (32, 32') of a side member (30) with a U-shaped cross section,
- the attachment portion (14) has a foot (16) capable of resting on the bottom of the side member (30) with a U-shaped section, inside the latter, when the bearing surfaces (12, 12') bear respectively on the opposite internal walls of the side member,
- the foot (16) has a V-shaped profile in which the mid-plane of the branches extends substantially perpendicularly to the attachment portion (14), and the top free edge of a first branch (16') of the V is secured to the attachment portion (14) of the Z, the other branch (16") of the V being capable of resting on the bottom (34) of the side member (30) when the bearing surfaces (12, 12') bear respectively on the opposite internal walls of the side member.

2. Attachment support (10) according to Claim 1, **characterized in that** the attachment portion (14) has a longitudinal indentation (15) with its axis parallel to the bearing faces (12, 12') of the Z, said longitudinal indentation (15) being capable of accommodating a portion of the exhaust-carrying pipe (20).

3. Attachment support (10) according to either of Claims 1 and 2, **characterized in that** the foot (16) comprises a hole (17) capable of allowing a portion of the exhaust-carrying pipe (20) to pass through when the latter is attached to the attachment portion (14).

4. Attachment support according to any one of Claims 1 to 3, **characterized in that** each bearing face (12, 12') comprises at least one groove (13, 13') opening onto a free edge.

5. Exhaust-carrying assembly comprising an attachment support (10) according to any one of Claims 1 to 4 and an exhaust-carrying pipe (20), said exhaust-carrying pipe (20) being L-shaped and having a free end capable of being secured to the exhaust, its other end being secured to the attachment portion (14) of the attachment support (10).

6. Method for securing the exhaust-carrying assembly according to Claim 5 in a side member (30) with U-shaped cross section, the method comprising the following steps:
- inserting the free end of the exhaust-carrying pipe (20) in a corresponding hole of the bottom of the side member (30);
- carrying out a quarter turn on the exhaust-carrying assembly in order to position the attachment support (10) and the pipe (20) inside the side member (30), the bearing faces (12, 12') being positioned in contact with the internal walls (32, 32'), the foot (16) being positioned on the bottom (34) of the side member (30);
- fastening the attachment support (10) to the side member (30) by securing the bearing faces (12, 12') to the internal walls (32, 32') of the side member (30).
